# EUROPÄISCHE PATENTSCHRIFT

(11) **EP 1 513 698 B1**
(45) Veröffentlichungstag und Bekanntmachung des Hinweises auf die Patenterteilung: **20.08.2008**
(21) Anmeldenummer: 03732472.0
(22) Anmeldetag: 27.05.2003
(51) Int. Cl.: B60J 3/02

(54) **SONNENBLENDE FÜR DEN INNENRAUM EINES KRAFTFAHRZEUGS**
SUN VISOR FOR THE INTERIOR OF A MOTOR VEHICLE
PARE-SOLEIL POUR INTERIEUR D'AUTOMOBILE

(30) Priorität: 05.06.2002 DE 10224835
(43) Veröffentlichungstag der Anmeldung: 16.03.2005
(73) Patentinhaber: Johnson Controls Interiors GmbH, 42285 Wuppertal (DE)
(72) Erfinder: DELUS, Christian, F-57645 Retonfey (FR); WEISS, Didier, F-57880 Guerting (FR); WELTER, Patrick, F-57730 Lachambre (FR); SELVINI, Frédéric, F-57550 Falck (FR)
(74) Vertreter: Hemmelmann, Klaus
(86) Internationale Anmeldenummer: PCT/EP2003/005523
(87) Internationale Veröffentlichungsnummer: WO 2003/104003

(56) Entgegenhaltungen:
- DE-A- 2 902 734
- US-A- 5 851 046
- US-B1- 6 328 370

## Beschreibung

Die Erfindung betrifft eine von einer Nichtgebrauchsstellung in Blendschutzstellungen klappbare Sonnenblende für den Innenraum eines Kraftfahrzeugs, welche einen Sonnenblendenkörpen und eine Führungseinrichtungs aufweist, wobei der Sonnenblendenkörper von einer ersten, im Wesentlichen frontalen Blendschutzstellung in eine zweite, im Wesentlichen seitliche Blendschutzstellung schwenkbar ist, wobei der Sonnenblendenkörper mittels der Führungseinrichtung in der Weise geführt wird, dass in jeder Blendschutzstellung die gleiche Flächenseite des Sonnenblendenkörpers zum Fahrzeuginnenraum weist.

### Stand der Technik

In der Druckschrift US 5,851,046 wird eine gattungsgemäße Sonnenblende offenbart, die einerseits aus einer näherungsweise horizontalen Staustellung in eine etwa vertikale Blendschutzstellung verklappt werden kann als auch mittels einer Schienenführung aus einer Blendschutzstellung vor der Windschutzscheibe in eine Blendschutzstellung vor dem Seitenfenster verschoben werden kann. Die Schiene verläuft zur einen Hälfte parallel zur Oberkante der Windschutzscheibe und zur anderen Hälfte parallel zur Oberkante des Seitenfensters, wobei beide Schienenabschnitte im Bereich der A-Säule des Fahrzeugs über ein weit in den Dachhimmel hineinragendes, gebogenes Segment miteinander verbunden sind.

Diese Anordnung erfordert einen erheblichen Bauraum und birgt, da die Sonnenblende in der Schiene notwendigerweise über eine Zweipunktführung geführt werden muss, bei mangelhafter Präzision der Führungseinrichtung gegebenenfalls die Gefahr eines Verklemmens.

Die Offenlegungsschrift DE 29 02 734 A1 beschreibt eine Sonnenblende, die mittels eines Kugelgelenks über eine flexible, also biegsame Halterung oder eine Kette von Gelenkstücken an der Fahrzeugdecke befestigt ist. Dadurch wird erreicht, dass sich die Sonnenblende frei im Raum vor dem Fahrer platzieren lässt und quer sowie hoch verstellbar in allen Richtungen gedreht werden kann. Eine definierte Führung der Sonnenblende wird durch diese Anordnung bewusst vermieden.

Aus der Patentschrift DE 38 29 976 C1 ist eine weitere Sonnenblende bekannt. Sie besteht aus einem Sonnenblendenkörper, der mittels eines in einem Lagerbock einerseits und im Sonnenblendenkörper andererseits drehbar gelagerten, L-förmigen Lagerbügels sowohl von einer horizontalen Nichtgebrauchsstellung nach unten als auch von einer Blendschutzstellung vor der Frontscheibe vor die Seitenscheibe des Fahrzeugs klappbar ist. Dabei weist die in der ersten, frontalen Blendschutzstellung nach außen weisende Flächenseite des Sonnenblendenkörpers in der zweiten, seitlichen Blendschutzstellung zum Fahrzeuginnenraum hin.

Diese allgemein übliche Ausbildung ist insofern nachteilhaft, als auf einer Flächenseite des Sonnenblendenkörpers angebrachte Ausstattungen, beispielsweise Spiegel, Halteeinrichtungen für Parkscheine oder dergleichen, nur in einer, üblicherweise der frontalen Blendschutzstellung für die Insassen zugänglich sind.

### Aufgabe

Der Erfindung liegt die Aufgabe zugrunde, eine Sonnenblende bereitzustellen, welche die genannten Nachteile des Standes der Technik vermeidet.

### Lösung

Die Aufgabe wird erfindungsgemäß nach einer ersten Ausbildung der Erfindung dadurch gelöst, dass bei einer Sonnenblende nach dem Oberbegriff des Anspruchs 1 der Sonnenblendenkörper mittels einer Führungseinrichtung in der Weise geführt wird, dass der Sonnenblendenkörper einerseits über eine zur Anordnung am Dachhimmel des Fahrzeugs vorgesehene Schienenführung und andererseits über einen sowohl zur Anordnung am Dachhimmel vorgesehenen als auch am Sonnenblendenkörper drehbar angeordneten Gelenkarm von der ersten in die zweite Blendschutzstellung schwenkbar geführt ist.

Der Gelenkarm umfaßt dabei mit Vorteil zwei gekröpfte Halbarme, die beim Klappen der Sonnenblende von der Nichtgebrauchsstellung in eine Blendschutzstellung zueinander um eine im Wesentlichen horizontale Achse drehbar sind. Die Halbarme können zur Erzeugung eines Gelenks zwei drehbar ineinander steckbare Schenkel aufweisen. Vorzugsweise sind der erste Halbarm zum Schwenken der Sonnenblende von der ersten in die zweite Blendschutzstellung um eine erste im Wesentlichen vertikale Achse im Dachhimmel und der zweite Halbarm um eine zur ersten Achse parallel versetzte zweite vertikale Achse im Sonnenblendenkörper drehbar gelagert.

Um den Sonnenblendenkörper in der frontalen, erfahrungsgemäß häufiger benutzten Blendschutzstellung zu halten, kann der Gelenkarm mittels einer Rasteinrichtung lösbar mit dem in der ersten, frontalen Blendschutzstellung befindlichen Sonnenblendenkörper verrastbar ausgeführt werden.

Die Schienenführung weist vorteilhafterweise eine am Dachhimmel befestigte, im Wesentlichen quer zur Fahrtrichtung horizontal angeordnete Führungsschiene und ein am Sonnenblendenkörper befestigtes Gleitstück auf. Das Gleitstück kann mit einem gekröpften Armstück versehen werden, das beim Schwenken der Sonnenblende von der ersten in die zweite Blendschutzstellung um eine im Wesentlichen vertikale Achse gegenüber der Führungsschiene drehbar ist. Vorzugsweise ist der Sonnenblendenkörper um einen im Wesentlichen horizontalen Schenkel des Armstücks von der Nichtgebrauchs- in eine Blendschutzstellung klappbar. Mit Vorteil stehen dabei das Armstück und der Gelenkarm in der Weise in Wirkzusammenhang, dass der Sonnenblendenkörper nur dann von der Nichtgebrauchs- in eine Blendschutzstellung klappbar ist, wenn die horizontalen Schenkel des Gelenkarms einerseits und der horizontale Schenkel des Armstücks andererseits miteinander fluchten.

Durch eine im Bereich des horizontalen Schenkels des Armstücks wirkende Arretiereinrichtung kann der Sonnenblendenkörper insbesondere in seiner in der Regel etwa horizontalen Nichtgebrauchsstellung lösbar gehalten werden.

Die Aufgabe wird ferner nach einer weiteren Ausbildung der Erfindung dadurch gelöst, dass bei einer Sonnenblende nach dem Oberbegriff des Anspruchs 11 der Sonnenblendenkörper mittels einer Führungseinrichtung in der Weise geführt wird, dass der Sonnenblendenkörper über ein ein Viergelenk bildendes Paar von Gelenkarmen mit im Wesentlichen vertikalen Drehachsen gegenüber dem Dachhimmel von der ersten in die zweite Blendschutzstellung schwenkbar geführt ist.

Das Gelenkarmpaar kann sonnenblendenkörperseitig in einem Gelenkblock gelagert werden, in dem die Sonnenblende ihrerseits zum Schwenken von der Nichtgebrauchs- in eine Blendschutzstellung um eine im Wesentlichen horizontale Gelenkachse klappbar angeordnet ist, vorzugsweise unter Verwendung einer im Bereich der horizontalen Achse wirkende Arretiereinrichtung, die den Sonnenblendenkörper insbesondere in der Nichtgebrauchsstellung lösbar hält.

Die Gelenkarme des Viergelenks berühren sich vorteilhafterweise in der ersten und/oder zweiten Blendschutzstellung zur Bildung eines Endanschlags, wobei zwischen den Gelenkarmen eine im Bereich des dieses Endanschlags wirkende Rasteinrichtung vorgesehen werden kann, welche den Sonnenblendenkörper in der gewünschten Blendschutzstellung hält. Alternativ kann mindestens ein Gelenk des Viergelenks zur Arretierung des Sonnenblendenkörpers in der ersten und/oder zweiten Blendschutzstellung unter Überwindung eines Totpunkts kniehebelartig überstreckbar ausgeführt werden.

### Figuren

Die Figuren stellen beispielhaft und schematisch verschiedene Ausführungen der Erfindung dar.

Es zeigen:
- Fig. 1: eine Sonnenblende für den linken Fahrzeuginsassen nach einer ersten Ausführung der Erfindung in frontaler Blendschutzstellung aus Sicht des Fahrzeuginsassen
- Fig. 2: die Sonnenblende nach Fig. 1 in Aufsicht in verschiedenen Blendschutzstellungen
- Fig. 3: einen vergrößerten Ausschnitt aus Fig. 1 mit Darstellung der Rasteinrichtung nach Anspruch 6
- Fig. 4: einen vergrößerten Ausschnitt aus Fig. 1 mit Darstellung der Arretiereinrichtung nach Anspruch 11
- Fig. 5: eine weitere erfindungsgemäße Sonnenblende in frontaler Blendschutzstellung aus Sicht des Fahrzeuginsassen
- Fig. 6: die Sonnenblende nach Fig. 5 in Aufsicht in verschiedenen Blendschutzstellungen
- Fig. 7: einen vergrößerten Ausschnitt aus Fig. 1 mit Darstellung der Arretiereinrichtung nach Anspruch 14
- Fig. 8: eine Prinzipskizze der Ausbildung des Viergelenks nach Anspruch 17

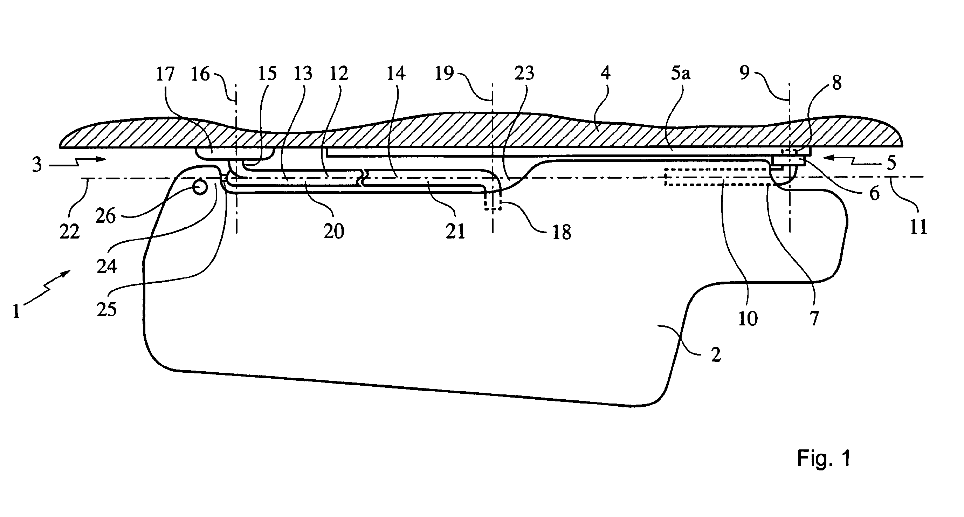

Die in Fig. 1 dargestellte Sonnenblende 1 besteht aus einen Sonnenblendenkörper 2, der über eine Führungseinrichtung 3 mit dem Dachhimmel 4 eines Kraftfahrzeugs verbunden ist.

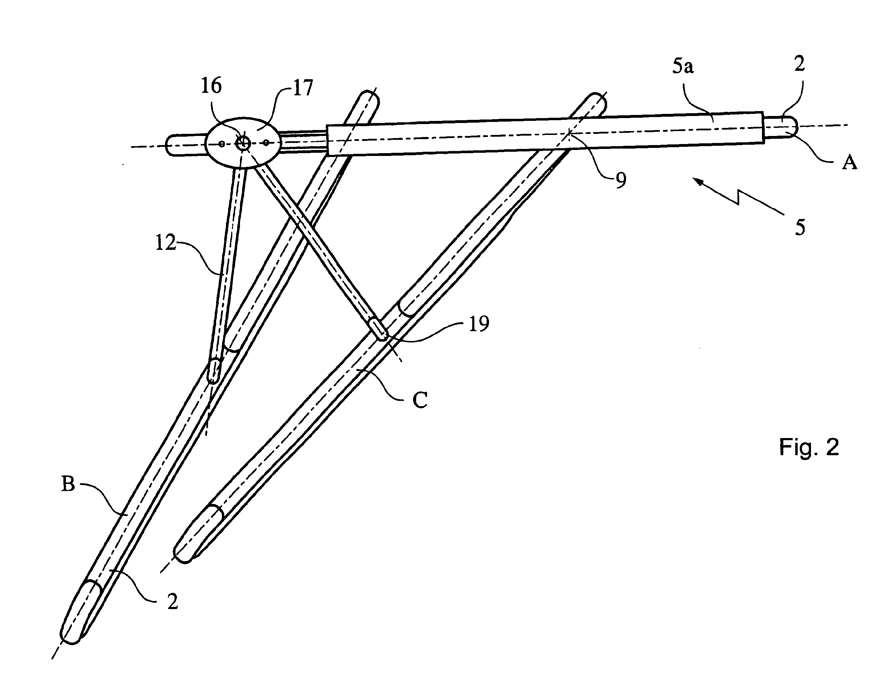

Die Führungseinrichtung 3 umfaßt, wie auch aus Fig. 2 ersichtlich, zum einen eine Schienenführung 5 mit einer ortsfest am Dachhimmel 4 angeordneten Führungsschiene 5a, die sich horizontal und quer zur Fahrtrichtung (Y-Achse des Fahrzeugs) erstreckt. In die Führungsschiene 5a ist ein Gleitstück 6 längsverschieblich eingelassen, das seinerseits ein gekröpftes Armstück 7 aufnimmt. Das Armstück 7 ist mit seinem ersten Schenkel 8 um eine vertikale Achse 9 im Gleitstück 6 und mit seinem zweiten Schenkel 10 um eine horizontale Achse 11 im Sonnenblendenkörper 2 drehbar.

Die Führungseinrichtung 3 besteht weiterhin aus einem Gelenkarm 12, der aus zwei gekröpften Halbarmen 13, 14 zusammengesetzt ist. Der erste Halbarm 13 ist mit einem Schenkel 15 um eine vertikale Drehachse 16 drehbar in einem am Dachhimmel 4 nahe der Seitenscheibe des Fahrzeugs befestigten Lagerböckchen 17 gelagert, während der zweite Halbarm 14 mit einem Schenkel 18 um eine vertikale Drehachse 19 drehbar etwa mittig in die Oberkante des Sonnenblendenkörpers 2 eingreift. Beide Halbarme 13, 14 sind ferner mit ihren übrigen, ineinander steckbaren Schenkeln 20, 21 um eine horizontale Drehachse 22 drehbar miteinander verbunden. Der Sonnenblendenkörper 2 weist an seiner Oberkante eine Ausnehmung 23 auf, welche den zur Aufnahme des Gelenkarms 12 notwendigen Raum schafft.

Falls die horizontalen Drehachsen 11 und 22 des Armstücks 7 und des Gelenkarms 12 miteinander fluchten, kann der Sonnenblendenkörper aus einer etwa waagerechten Nichtgebrauchsstellung, in der er gegebenenfalls am Dachhimmel 4 anliegt, nach unten vor die Windschutzscheibe in die frontale Blendschutzstellung (Position A) geklappt werden. Dabei verdrehen sich die Halbarme 13, 14 zueinander um die horizontale Drehachse 22 und das Armstück 7 um die horizontale Drehachse 11 gegenüber dem Sonnenblendenkörper 2.

Wie in Fig. 2 ersichtlich, ist der Sonnenblendenkörper aus dieser Lage über beliebige Zwischenstellungen (beispielsweise Position C) in eine seitliche Blendschutzstellung (Position B) schwenkbar, in der das Seitenfenster des Fahrzeugs bereichsweise abgedeckt wird. Dabei dreht sich der Gelenkarm 12 in Lagerböckchen 17 und Sonnenblendenkörper 2 um die vertikalen Drehachsen 16 und 19. Gleichzeitig wird das Gleitstück 6 horizontal und quer zur Fahrtrichtung in der Führungsschiene 5a nach außen zum Seitenfenster hin verschoben, wobei sich das Armstück 7 im Gleitstück 6 um die vertikale Drehachse 9 verdreht. Das Zurückschwenken in die frontale Blendschutzstellung erfolgt mit umgekehrtem Bewegungsablauf.

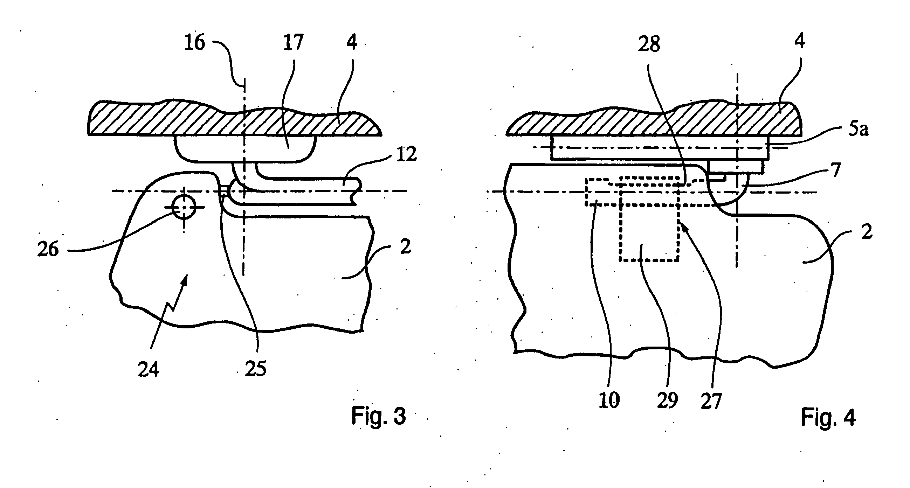

Ein ungewolltes Schwenken des Sonnenblendenkörpers in die seitliche Blendschutzstellung kann durch die in Fig. 3 vergrößert dargestellte Rasteinrichtung 24 vermieden werden. Hierzu wird ein waagerecht aus dem Halbarm 13 nach außen ragender Vorsprung 25 im seitlichen Bereich der Ausnehmung 23 des Sonnenblendenkörpers 2 verrastet. Durch Pressen eines daneben in den Sonnenblendenkörper 2 eingelassenen Knopfes 26 können die Rastverbindungen gelöst und der Sonnenblendenkörper 2 ohne Umgreifen in die seitliche Blendschutzstellung geschwenkt werden. Ferner ist im Sonnenblendenkörper 2, wie aus Fig. 4 ersichtlich, eine Arretiereinrichtung 27 mit einer auf eine Abflachung 28 des Schenkels 10 des Armstücks 7 wirkenden Blattfeder 29 vorgesehen, durch die der Sonnenblendenkörper 2 lösbar in der Nichtgebrauchsstellung gehalten wird.

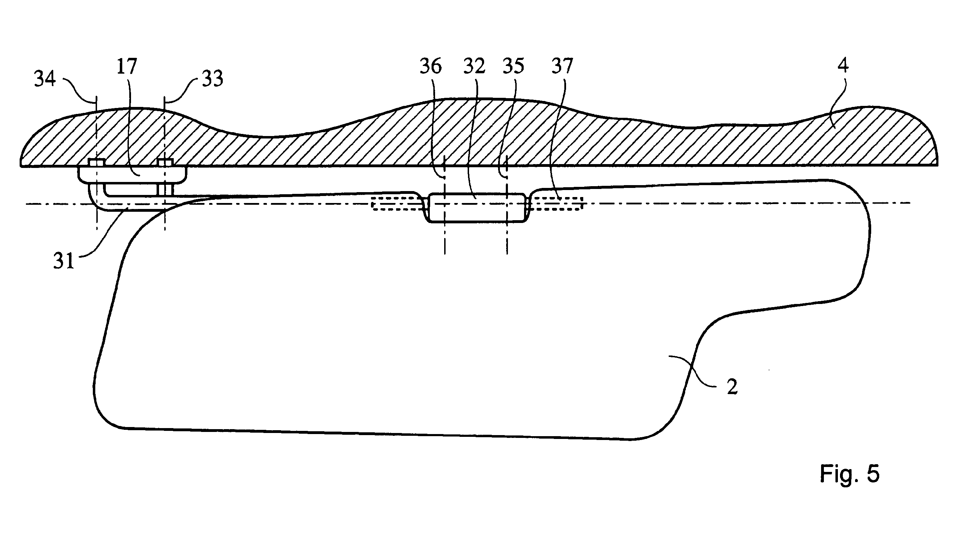

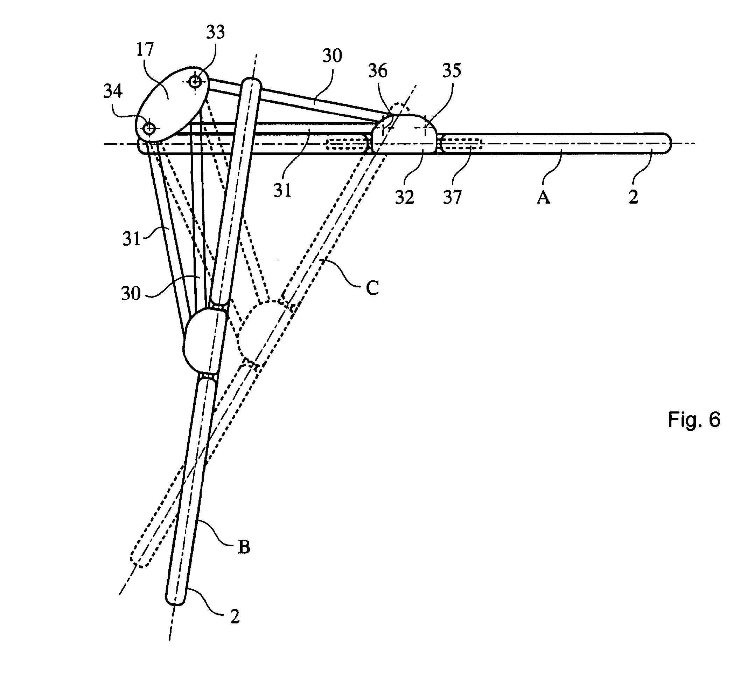

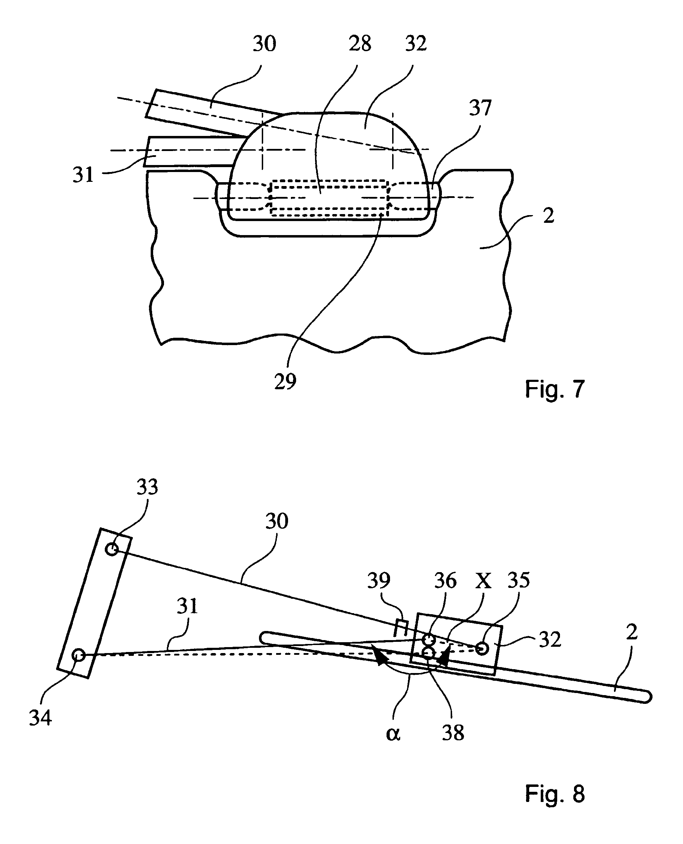

Bei der in den Fig. 5 und 6 dargestellten Ausführung ist die Führungseinrichtung 3 für den Sonnenblendenkörper 2 als Viergelenk ausgebildet, wobei ein doppelt gekröpftes Paar von Gelenkarmen 30, 31 an einem Ende im Lagerböckchen 17 und am ihrem anderen Ende in einem Gelenkblock 32 zueinander beabstandet um vertikale Drehachsen 33 bis 36 drehbar gelagert ist. Während das Lagerböckchen 17 ortsfest mit dem Dachhimmel 4 verbunden ist, nimmt der Gelenkblock 32 zusätzlich ein in den Sonnenblendenkörper 2 eingelassenes Achsstück 37 auf, um das dieser von einer beliebigen Nichtgebrauchsstellung in eine Blendschutzstellung geklappt werden kann. Eine analog der zuvor beschriebenen Vorrichtung wirkende Arretiereinrichtung 27 im Gelenkblock 32 hält den Sonnenblendenkörper 2 dabei in der Nichtgebrauchsstellung (Fig. 7).

In der frontalen Blendschutzstellung (Position A) wird der Sonnenblendenkörper 2 dadurch gehalten, dass das Viergelenk über einen Totpunkt 38 hinaus kniehebelartig in die in Fig. 8 dargestellte Stellung überstreckt wird, wobei sich die Gelenkarme 30, 31 kurzfristig elastisch verformen. Eine die Drehachsen 35, 36 im Gelenkblock 32 verbindende virtuelle Gerade X fluchtet in der Endstellung nicht mehr mit der hinteren Drehachse 34, sondern schließt mit dem zugehörigen Gelenkarm 31 einen stumpfen Winkel α ein. Der gekröpfte, die Drehachse 36 bildende Bereich des hinteren Gelenkarms 31 liegt dabei seitlich am anderen Gelenkarm 30 an und dient somit als Endanschlag für das Viergelenk. Selbstverständlich kann dort zusätzlich oder alternativ zu der Kniehebelausbildung eine zwischen den Gelenkarmen 30, 31 wirkende, lösbare Rasteinrichtung 39 vorgesehen werden.

In sinngemäßer Weise kann der Sonnenblendenkörper 2 auch in der seitlichen Blendschutzstellung gehalten werden.

### Bezugszeichen

- 1: Sonnenblende
- 2: Sonnenblendenkörper
- 3: Führungseinrichtung
- 4: Dachhimmel
- 5: Schienenführung
- 5a: Führungsschiene
- 6: Gleitstück
- 7: Armstück
- 8: Schenkel (des Armstücks 7, vertikal)
- 9: Drehachse (vertikal)
- 10: Schenkel (des Armstücks 7, horizontal)
- 11: Drehachse (horizontal)
- 12: Gelenkarm
- 13, 14: Halbarm
- 15: Schenkel (des Halbarms 13, vertikal)
- 16: Drehachse (vertikal)
- 17: Lagerböckchen
- 18: Schenkel (des Halbarms 14, vertikal)
- 19: Drehachse (vertikal)
- 20, 21: Schenkel (der Halbarme 13, 14, horizontal)
- 22: Drehachse (horizontal)
- 23: Ausnehmung
- 24: Rasteinrichtung
- 25: Vorsprung
- 26: Knopf
- 27: Arretiereinrichtung
- 28: Abflachung
- 29: Blattfeder
- 30,31: Gelenkarm
- 32: Gelenkblock
- 33 bis 36: Drehachse (der Gelenkarme, vertikal)
- 37: Achsstück
- 38: Totpunkt
- 39: Rasteinrichtung

## Patentansprüche

1. Von einer Nichtgebrauchsstellung in Blendschutzstellungen klappbare Sonnenblende (1) für den Innenraum eines Kraftfahrzeugs, welche einen Sonnenblendenkörper (2) und eine Führungseinrichtung (3) aufweist, wobei der Sonnenblendenkörper (2) von einer ersten, im Wesentlichen frontalen Blendschutzstellung (Position A) in eine zweite, im Wesentlichen seitliche Blendschutzstellung (Position B) schwenkbar ist, wobei der Sonnenblendenkörper (2) mittels der Führungseinrichtung (3) in der Weise geführt wird, dass in jeder Blendschutzstellung die gleiche Flächenseite des Sonnenblendenkörpers zum Fahrzeuginnenraum weist, **dadurch gekennzeichnet, dass** der Sonnenblendenkörper (2) einerseits über eine zur Anordnung am Dachhimmel (4) des Fahrzeugs vorgesehene Schienenführung (5) und andererseits über einen sowohl zur Anordnung am Dachhimmel vorgesehenen als auch am Sonnenblendenkörper drehbar angeordneten Gelenkarm (12) von der ersten in die zweite Blendschutzstellung schwenkbar geführt ist.

2. Sonnenblende nach Anspruch 1, **dadurch gekennzeichnet, dass** der Gelenkarm (12) zwei gekröpfte Halbarme (13), (14) umfaßt, die beim Klappen der Sonnenblende (1) von der Nichtgebrauchsstellung in die frontale Blendschutzstellung zueinander um eine im Wesentlichen horizontale Drehachse (22) drehbar sind.

3. Sonnenblende nach Anspruch 2, **dadurch gekennzeichnet, dass** die Halbarme (13), (14) zwei drehbar ineinander steckbare Schenkel (20), (21) aufweisen.

4. Sonnenblende nach Anspruch 2 oder 3, **dadurch gekennzeichnet, dass** der erste Halbarm (20) zum Schwenken des Sonnenblendenkörpers (2) von der ersten in die zweite Blendschutzstellung um eine im Wesentlichen vertikale Drehachse (16) im Dachhimmel und der zweite Halbarm (21) um eine zur Drehachse (16) parallel versetzte Drehachse (19) im Sonnenblendenkörper drehbar gelagert sind.

5. Sonnenblende nach einem der Ansprüche 1 bis 4, **dadurch gekennzeichnet, dass** der Gelenkarm (12) mittels einer Rasteinrichtung (24) lösbar mit dem in der ersten, frontalen Blendschutzstellung befindlichen Sonnenblendenkörper (2) verrastbar ist.

6. Sonnenblende nach einem der Ansprüche 1 bis 5, **dadurch gekennzeichnet, dass** die Schienenführung (5) eine am Dachhimmel befestigte, im Wesentlichen quer zur Fahrtrichtung horizontal angeordnete Führungsschiene (5a) und ein am Sonnenblendenkörper (2) befestigtes Gleitstück (6) aufweist.

7. Sonnenblende nach Anspruch 6, **dadurch gekennzeichnet, dass** das Gleitstück (6) mit einem gekröpften Armstück (7) versehen ist, das beim Schwenken des Sonnenblendekörpers (2) von der ersten in die zweite Blendschutzstellung um eine im Wesentlichen vertikale Drehachse (9) gegenüber der Führungsschiene (5a) drehbar ist.

8. Sonnenblende nach Anspruch 7, **dadurch gekennzeichnet, dass** der Sonnenblendenkörper (2) um einen im Wesentlichen horizontalen Schenkel (10) des Armstücks (7) von der Nichtgebrauchs- in die frontale Blendschutzstellung klappbar ist.

9. Sonnenblende nach Anspruch 8, **dadurch gekennzeichnet, dass** das Armstück (7) und der Gelenkarm (12) in der Weise in Wirkzusammenhang stehen, dass der Sonnenblendenkörper (2) nur dann von der Nichtgebrauchs- in eine Blendschutzstellung klappbar ist, wenn die horizontalen Schenkel (15), (18) des Gelenkarms (12) einerseits und der horizontale Schenkel (10) des Armstücks (7) andererseits miteinander fluchten.

10. Sonnenblende nach einem der Ansprüche 1 bis 9, **gekennzeichnet durch** eine im Bereich des horizontalen Schenkels (10) des Armstücks (7) wirkende, den Sonnenblendenkörper (2) insbesondere in Nichtgebrauchsstellung lösbar haltende Arretiereinrichtung (27).

11. Von einer Nichtgebrauchsstellung in Blendschutzstellungen klappbare Sonnenblende (1) für den Innenraum eines Kraftfahrzeugs, welche einen Sonnenblendenkörper (2) und eine Führungseinrichtung (3) aufweist, wobei den Sonnenblendenkörper (2) von einer ersten, im Wesentlichen frontalen Blendschutzstellung (Position A) in eine zweite, im Wesentlichen seitliche Blendschutzstellung (Position B) schwenkbar ist, wobei der Sonnenblendenkörper (2) mittels der Führungseinrichtung (3) in der Weise geführt wird, dass in jeder Blendschutzstellung die gleiche Flächenseite des Sonnenblendenkörpers zum Fahrzeuginnenraum weist, **dadurch gekennzeichnet, dass** der Sonnenblendenkörper (2) über ein ein Viergelenk bildendes Paar von Gelenkarmen (30), (31) mit im Wesentlichen vertikalen Drehachsen (33), (34), (35), (36) gegenüber dem Dachhimmel (4) von der ersten in die zweite Blendschutzstellung schwenkbar geführt ist.

12. Sonnenblende nach Anspruch 11, **dadurch gekennzeichnet**, **dadurch gekennzeichnet, dass** das Paar von Gelenkarmen (30), (31) sonnenblendenkörperseitig in einem Gelenkblock (32) drehbar gelagert ist, in dem der Sonnenblendenkörper (2) seinerseits zum Klappen von der Nichtgebrauchs-in eine Blendschutzstellung um ein im Wesentlichen horizontales Achsstück (37) klappbar angeordnet ist.

13. Sonnenblende nach Anspruch 12, **gekennzeichnet durch** eine im Bereich des horizontalen Achsstücks (37) wirkende Arretiereinrichtung (27), die den Sonnenblendekörper (2) insbesondere in der Nichtgebrauchsstellung lösbar hält.

14. Sonnenblende nach einem der Ansprüche 11 bis 13, **dadurch gekennzeichnet, dass** sich die Gelenkarme (30), (31) in der ersten und/oder zweiten Blendschutzstellung zur Bildung eines Endanschlags berühren.

15. Sonnenblende nach Anspruch 14, **gekennzeichnet durch** eine zwischen den Gelenkarmen (30), (31) im Bereich des Endanschlags wirkende Rasteinrichtung (39).

16. Sonnenblende nach einem der Ansprüche 11 bis 15, **dadurch gekennzeichnet, dass** mindestens ein Gelenk des Viergelenks zur Arretierung des Sonnenblendenkörpers (2) in der ersten und/oder zweiten Blendschutzstellung unter Überwindung eines Totpunkts (38) kniehebelartig überstreckbar ist.

## Claims

1. Sun visor (1) which can be folded from an inoperative position into anti-glare positions and is intended for the interior of a motor vehicle, the sun visor having a sun visor body (2) and a guide device (3), wherein the sun visor body (2) can be pivoted from a first, essentially frontal anti-glare position (position A) into a second, essentially lateral anti-glare position (position B), and wherein the sun visor body (2) is guided by means of the guide device (3) in such a manner that, in every anti-glare position, the same surface side of the sun visor body faces the vehicle interior, **characterized in that** the sun visor body (2) is guided pivotably from the first into the second anti-glare position via a rail guide (5), which is provided for arrangement on the roof lining (4) of the vehicle, and via an articulation arm (12) which is provided for arrangement on the roof lining and also is arranged rotatably on the sun visor body.

2. Sun visor according to Claim 1, **characterized in that** the articulation arm (12) has two bent half arms (13), (14) which, when the sun visor (1) is folded from the inoperative position into the frontal anti-glare position, are rotatable with respect to each other about an essentially horizontal axis of rotation (22).

3. Sun visor according to Claim 2, **characterized in that** the half arms (13), (14) have two limbs (20), (21) which can be inserted rotatably one inside the other.

4. Sun visor according to Claim 2 or 3, **characterized in that** the first half arm (20) is mounted rotatably about an essentially vertical axis of rotation (16) in the roof lining in order to pivot the sun visor body (2) from the first into the second anti-glare position, and the second half arm (21) is mounted rotatably about an axis of rotation (19), which is offset parallel to the axis of rotation (16), in the sun visor body.

5. Sun visor according to one of Claims 1 to 4, **characterized in that** the articulation arm (12) can be latched releasably by means of a latching device (24) to the sun visor body (2) in the first, frontal anti-glare position.

6. Sun visor according to one of Claims 1 to 5, **characterized in that** the rail guide (5) has a guide rail (5a) which is fastened to the roof lining and is arranged horizontally essentially transversely with respect to the direction of travel, and a sliding piece (6) which is fastened to the sun visor body (2).

7. Sun visor according to Claim 6, **characterized in that** the sliding piece (6) is provided with a bent arm piece (7) which is rotatable about an essentially vertical axis of rotation (9) in relation to the guide rail (5a) during the pivoting of the sun visor body (2) from the first into the second anti-glare position.

8. Sun visor according to Claim 7, **characterized in that** the sun visor body (2) is foldable about an essentially horizontal limb (10) of the arm piece (7) from the inoperative position into the frontal anti-glare position.

9. Sun visor according to Claim 8, **characterized in that** the arm piece (7) and the articulation arm (12) are in an operative interrelationship in such a manner that the sun visor body (2) can only be folded from the inoperative position into an anti-glare position when the horizontal limbs (15), (18) of the articulation arm (12) and the horizontal limb (10) of the arm piece (7) are aligned with one another.

10. Sun visor according to one of Claims 1 to 9, **characterized by** a locking device (27) which acts in the region of the horizontal limb (10) of the arm piece (7) and releasably holds the sun visor body (2), in particular in the inoperative position.

11. Sun visor (1) which can be folded from an inoperative position into anti-glare positions and is intended for the interior of a motor vehicle, the sun visor having a sun visor body (2) and a guide device (3), wherein the sun visor body (2) can be pivoted from a first, essentially frontal anti-glare position (position A) into a second, essentially lateral anti-glare position (position B), and wherein the sun visor body (2) is guided by means of the guide device (3) in such a manner that, in every anti-glare position, the same surface side of the sun visor body faces the vehicle interior, **characterized in that** the sun visor body (2) is guided pivotably in relation to the roof lining (4) from the first into the second anti-glare position via a pair of articulation arms (30), (31) having essentially vertical axes of rotation (33), (34), (35), (36), said pair forming a four-bar linkage.

12. Sun visor according to Claim 11, **characterized in that** the pair of articulation arms (30), (31) is mounted rotatably on the sun-visor-body side in an articulation block (32) in which the sun visor body (2), for its part, is arranged such that it can be folded about an essentially horizontal spindle piece (37) in order to be folded from the inoperative position into an anti-glare position.

13. Sun visor according to Claim 12, **characterized by** a locking device (27) which acts in the region of the horizontal spindle piece (37) and releasably holds the sun visor body (2), in particular in the inoperative position.

14. Sun visor according to one of Claims 11 to 13, **characterized in that** the articulation arms (30), (31) touch in the first and/or second anti-glare position in order to form an end stop.

15. Sun visor according to Claim 14, **characterized by** a latching device (39) which acts between the articulation arms (30), (31) in the region of the end stop.

16. Sun visor according to one of Claims 11 to 15, **characterized in that** at least one joint of the four-bar linkage can be overstretched in the manner of a toggle lever with a dead centre (38) being overcome, in order to lock the sun visor body (2) in the first and/or second anti-glare position.

## Revendications

1. Pare-soleil (1) pouvant être rabattu d'une position de non utilisation dans des positions anti-éblouissement pour l'habitacle d'un véhicule automobile, qui présente un corps de pare-soleil (2) et un dispositif de guidage (3), le corps de pare-soleil (2) pouvant pivoter d'une première position anti-éblouissement essentiellement frontale (position A) dans une deuxième position anti-éblouissement essentiellement latérale (position B), et le corps de pare-soleil (2) étant guidé au moyen du dispositif de guidage (3) de telle sorte que, dans chaque position anti-éblouissement, le même côté de surface du corps de pare-soleil soit tourné vers l'habitacle du véhicule, **caractérisé en ce que** le corps de pare-soleil (2) est guidé de manière pivotante de la première dans la deuxième position anti-éblouissement, d'une part par le biais d'une glissière sur rail (5) prévue pour être disposée sur l'habillage du toit (4) du véhicule, et d'autre part par le biais d'un bras articulé (12) prévu pour être disposé sur l'habillage du toit et également disposé de manière rotative sur le corps de pare-soleil.

2. Pare-soleil selon la revendication 1, **caractérisé en ce que** le bras articulé (12) comprend deux demi-bras coudés (13), (14) qui, lors du rabattement du pare-soleil (1) de la position de non utilisation dans la position anti-éblouissement frontale peuvent tourner l'un par rapport à l'autre autour d'un axe de rotation (22) essentiellement horizontal.

3. Pare-soleil selon la revendication 2, **caractérisé en ce que** les demi-bras (13), (14) présentent deux branches (20), (21) pouvant être enfoncées l'une dans l'autre par rotation.

4. Pare-soleil selon la revendication 2 ou 3, **caractérisé en ce que** le premier demi-bras (20) est monté de manière rotative autour d'un axe de rotation (16) essentiellement vertical dans l'habillage du toit pour faire pivoter le corps de pare-soleil (2) de la première dans la deuxième position anti-éblouissement, et le deuxième demi-bras (21) est monté de manière rotative autour d'un axe de rotation (19) décalé parallèlement à l'axe de rotation (16) dans le corps de pare-soleil.

5. Pare-soleil selon l'une quelconque des revendications 1 à 4, **caractérisé en ce que** le bras articulé (12) peut être encliqueté au moyen d'un dispositif d'encliquetage (24) de manière détachable avec le corps de pare-soleil (2) se trouvant dans la première position anti-éblouissement frontale.

6. Pare-soleil selon l'une quelconque des revendications 1 à 5, **caractérisé en ce que** la glissière sur rail (5) présente un rail de guidage (5a) fixé à l'habillage du toit, disposé essentiellement horizontalement transversalement à la direction de conduite, et un coulisseau (6) fixé sur le corps de pare-soleil (2).

7. Pare-soleil selon la revendication 6, **caractérisé en ce que** le coulisseau (6) est pourvu d'un élément de bras coudé (7), qui, lors du pivotement du corps de pare-soleil (2) de la première dans la deuxième position anti-éblouissement, peut tourner par rapport au rail de guidage (5a) autour d'un axe de rotation essentiellement vertical (9).

8. Pare-soleil selon la revendication 7, **caractérisé en ce que** le corps de pare-soleil (2) peut être rabattu de la position de non utilisation dans la position anti-éblouissement frontale autour d'une branche (10) essentiellement horizontale de l'élément de bras (7).

9. Pare-soleil selon la revendication 8, **caractérisé en ce que** l'élément de bras (7) et le bras articulé (12) sont en liaison fonctionnelle de telle sorte que le corps de pare-soleil (2) ne puisse être rabattu de la position de non utilisation dans une position anti-éblouissement que lorsque les branches horizontales (15), (18) du bras articulé (12) d'une part et la branche horizontale (10) de l'élément de bras (7) d'autre part sont alignées mutuellement.

10. Pare-soleil selon l'une quelconque des revendications 1 à 9, **caractérisé par** un dispositif de blocage (27) agissant dans la région de la branche horizontale (10) de l'élément de bras (7), retenant de manière détachable le corps de pare-soleil (2), notamment dans la position de non utilisation.

11. Pare-soleil (1) pouvant être rabattu d'une position de non utilisation dans des positions anti-éblouissement pour l'habitacle d'un véhicule automobile, qui présente un corps de pare-soleil (2) et un dispositif de guidage (3), le corps de pare-soleil (2) pouvant pivoter d'une première position anti-éblouissement essentiellement frontale (position A) dans une deuxième position anti-éblouissement essentiellement latérale (position B), et le corps de pare-soleil (2) étant guidé au moyen du dispositif de guidage (3) de telle sorte que dans chaque position anti-éblouissement, le même côté de surface du corps de pare-soleil soit tourné vers l'habitacle du véhicule, **caractérisé en ce que** le corps de pare-soleil (2) est guidé de manière pivotante de la première dans la deuxième position anti-éblouissement par le biais d'une paire de bras articulés (30), (31) formant un quadrilatère articulé, avec des axes de rotation essentiellement verticaux (33), (34), (35), (36), par rapport à l'habillage du toit (4).

12. Pare-soleil selon la revendication 11, **caractérisé en ce que** la paire de bras articulés (30), (31) est montée à rotation du côté du corps de pare-soleil dans un bloc articulé (32), dans lequel le corps de pare-soleil (2) est disposé pour sa part de manière à pouvoir être rabattu de la position de non utilisation dans une position anti-éblouissement autour d'un élément d'axe essentiellement horizontal (37).

13. Pare-soleil selon la revendication 12, **caractérisé par** un dispositif de blocage (27) agissant dans la région de l'élément d'axe horizontal (37), qui retient de manière détachable le corps de pare-soleil (2) notamment dans la position de non utilisation.

14. Pare-soleil selon l'une quelconque des revendications 11 à 13, **caractérisé en ce que** les bras articulés (30), (31) sont en contact dans la première et/ou dans la deuxième position anti-éblouissement pour former une butée de fin de course.

15. Pare-soleil selon la revendication 14, **caractérisé par** un dispositif d'encliquetage (39) agissant entre les bras articulés (30), (31) dans la région de la butée de fin de course.

16. Pare-soleil selon l'une quelconque des revendications 11 à 15, **caractérisé en ce qu'**au moins une articulation du quadrilatère articulé peut être étirée en forme de genouillère pour bloquer le corps de pare-soleil (2) dans la première et/ou la deuxième position anti-éblouissement en surmontant un point mort (38).
